# EUROPEAN PATENT APPLICATION

(11) **EP 4 682 080 A1**
(43) Date of publication of application: **21.01.2026**
(21) Application number: 24770819.1
(22) Date of filing: 11.03.2024
(51) Int. Cl.: B65D 81/26, B32B 27/00, B32B 27/02, B32B 27/18, B65D 65/40

(54) **OXYGEN SCAVENGER PACKAGE, AIR-PERMEABLE PACKAGING MATERIAL FOR OXYGEN SCAVENGER, AND METHOD FOR PRODUCING SAME**

(30) Priority: 14.03.2023 JP 2023039303
(71) Applicant: MITSUBISHI GAS CHEMICAL COMPANY, INC., Chiyoda-ku Tokyo 100-8324 (JP)
(72) Inventor: SATO, Daiki, Tokyo 125-8601 (JP); WATANABE, Risa, Tokyo 125-8601 (JP); MASUYAMA, Tomohiro, Tokyo 125-8601 (JP)
(74) Representative: Müller-Boré & Partner Patentanwälte PartG mbB
(86) International application number: PCT/JP2024/009213
(87) International publication number: WO 2024/190713

(57) **Abstract**

An oxygen scavenger package 100 including: an oxygen scavenger 30; and an air-permeable packaging material 10 housing the oxygen scavenger 30, in which the air-permeable packaging material 10 has a structure including, in this order, an outer layer 11 including a substrate layer 11a and a welding layer 11b in this order and having no through-hole, an intermediate layer 13 including a nonwoven fabric, and an inner layer 15 having a through-hole H, the air-permeable packaging material 10 does not contain fluorine, a melting point of a resin constituting the nonwoven fabric is higher by 50°C or more than a higher one of a melting point of a resin constituting the welding layer 11b and a melting point of a resin constituting the inner layer 15, and a thickness t of the nonwoven fabric is 0.20 mm or more and 0.42 mm or less.

## Description

### Technical Field

The present invention relates to an oxygen scavenger package, an air-permeable packaging material for an oxygen scavenger, and a method for producing the same.

### Background Art

For various articles such as food products, beverages, medical and pharmaceutical products, medical supplies, cosmetics, metal products and electronic products that easily deteriorate or degrade under the effect of oxygen, an oxygen scavenger that removes oxygen in a sealed container containing these has been used to prevent oxidation degradation and to enable storage for a long period of time.

The oxygen scavenger has been employed in various manners based on the purpose or the form of use thereof, and an example thereof is a method of forming a sachet-shaped oxygen scavenger package by packaging an oxygen scavenger, which is in powder or tablet form, in a packaging material. When this oxygen scavenger package is placed in a sealed container storing a food product or the like, oxidation degradation of the food product or the like can be prevented because the oxygen scavenger in an inner part of the oxygen scavenger package removes oxygen in the sealed container.

As such a packaging material for an oxygen scavenger, for example, sheets of a resin, paper, nonwoven fabric, or the like or a laminate of these has been used. Examples of the packaging material in which a resin layer and a layer of paper or nonwoven fabric are stacked include a packaging material obtained by stacking a resin layer having a vent hole formed in advance and a layer of paper or nonwoven fabric. This attempts to ensure air permeability with the outside and effectively exhibiting oxygen scavenging performance of the oxygen scavenger by using the resin layer having a vent hole formed in advance.

Furthermore, oxygen scavengers are used for various food products, and when an oxygen scavenger package is used for a food product containing a large amount of oil, in a case where the packaging material does not have oilproof properties or has insufficient oilproof properties, the oil permeates the packaging material and causes troubles such that oxygen scavenging performance decreases due to decrease in air permeability. In addition, there is a problem that the oxygen scavenger deteriorates by the permeated oil or the appearance of the oxygen scavenger package is impaired.

In order to solve such a problem, in a known oxygen scavenger package, oilproof paper (hereinafter, also referred to as "fluorine-based oilproof paper") coated and impregnated with an oilproof agent containing fluorine has been widely used as a packaging material.

### Citation List

### Patent Document

Patent Document 1: JP 2009-35689 A

### Summary of Invention

### Technical Problem

However, a water-repellent oilproof agent composition suitably used for a packaging material for an oxygen scavenger as disclosed in, for example, Patent Document 1 includes a perfluoroalkyl compound (hereinafter, abbreviated as "PFAS"). Since PFAS is hardly degradable and has high biological accumulation, there has been a movement to regulate the use of PFAS worldwide, particularly in Europe and the United States, in recent years.

Because of this, defluorination is required also for the packaging material for an oxygen scavenger; however, the study conducted by the inventors of the present invention has revealed that there is a problem in oilproof properties and oxygen scavenging performance when oilproof paper or nonwoven fabric not containing fluorine is used instead of fluorine-based oilproof paper.

Thus, an object of the present invention is to provide an oxygen scavenger package that can cope with defluorination and can exhibit excellent oilproof properties and oxygen scavenging performance, an air-permeable packaging material for an oxygen scavenger, and a method for producing the air-permeable packaging material for an oxygen scavenger.

### Solution to Problem

That is, the gist of constituents of the present invention includes the following:
[1] An oxygen scavenger package including:
   an oxygen scavenger; and
   an air-permeable packaging material housing the oxygen scavenger,
   in which the air-permeable packaging material has a structure including, in this order, an outer layer including a substrate layer and a welding layer in this order and having no through-hole, an intermediate layer including a nonwoven fabric, and an inner layer having a through-hole, the air-permeable packaging material does not contain fluorine, a melting point of a resin constituting the nonwoven fabric is higher by 50°C or more than a higher one of a melting point of a resin constituting the welding layer and a melting point of a resin constituting the inner layer, and the nonwoven fabric has a thickness of 0.20 mm or more and 0.42 mm or less.
[2] The oxygen scavenger package according to [1], in which the substrate layer contains one or more selected from the group consisting of polyethylene terephthalate and biaxially stretched polypropylene.
[3] The oxygen scavenger package according to [1] or [2], in which the welding layer contains one or more selected from the group consisting of polyethylene and an ethylene copolymer.
[4] The oxygen scavenger package according to any one of [1] to [3], in which the nonwoven fabric contains one or more selected from the group consisting of polyamide and polyester.
[5] The oxygen scavenger package according to any one of [1] to [4], in which the inner layer contains linear low-density polyethylene.
[6] The oxygen scavenger package according to any one of [1] to [5], in which the melting point of the resin constituting the nonwoven fabric is 150°C or higher and 300°C or lower.
[7] The oxygen scavenger package according to any one of [1] to [6], in which the air-permeable packaging material is formed in a bag shape by heat-welding edge portions to each other with the inner layer inside, and a width perpendicular to a length direction of the heat-welded portion is 0.3 mm or more and 15 mm or less.
[8] An air-permeable packaging material for an oxygen scavenger having a structure including, in this order:
   an outer layer including a substrate layer and a welding layer in this order and having no through-hole;
   an intermediate layer including a nonwoven fabric; and
   an inner layer having a through-hole,
   in which the air-permeable packaging material for an oxygen scavenger does not contain fluorine, a melting point of a resin constituting the nonwoven fabric is higher by 50°C or more than a higher one of a melting point of a resin constituting the welding layer and a melting point of a resin constituting the inner layer, and the nonwoven fabric has a thickness of 0.20 mm or more and 0.42 mm or less.
[9] The air-permeable packaging material for an oxygen scavenger according to [8], the air-permeable packaging material being formed in a bag shape by heat-welding edge portions to each other with the inner layer inside,
   in which a width perpendicular to a length direction of the heat-welded portion is 0.3 mm or more and 15 mm or less.
[10] A method for producing the air-permeable packaging material for an oxygen scavenger described in [8] or [9], the method including stacking the outer layer including the substrate layer and the welding layer, the intermediate layer, and the inner layer in such a way that the layers are included in this order and welding the layers,
   in which the welding is performed at a temperature lower than the melting point of the resin constituting the nonwoven fabric of the intermediate layer.

### Advantageous Effects of Invention

According to the present invention, it is possible to provide an oxygen scavenger package that can cope with defluorination and can exhibit excellent oilproof properties and oxygen scavenging performance, an air-permeable packaging material for an oxygen scavenger, and a method for producing the air-permeable packaging material for an oxygen scavenger.

### Brief Description of Drawings

FIG. 1 is a schematic cross-sectional view showing an aspect of an oxygen scavenger package according to the present embodiment.
FIG. 2 is a schematic view of one aspect of the oxygen scavenger package according to the present embodiment shown in FIG. 1, as observed from an X direction.

### Description of Embodiments

Embodiments of an oxygen scavenger package, an air-permeable packaging material for an oxygen scavenger, and a method for producing the air-permeable packaging material for an oxygen scavenger according to the present invention will be described in detail below.

Note that, in the present description, a phrase of "A to B" indicating a numerical range means "A or more and B or less" (in the case of A < B), or "A or less and B or more" (in the case of A > B). Furthermore, in the present invention, a combination of preferable aspects is a more preferable aspect.

Furthermore, in the present description, "(meth)acrylate" means acrylate and/or methacrylate, "(meth)acryl" means acryl and/or methacryl, and "(meth)acrylic acid" means acrylic acid and/or methacrylic acid, and the like unless otherwise noted.

### [Oxygen scavenger package]

The oxygen scavenger package of the present invention includes an oxygen scavenger and an air-permeable packaging material housing the oxygen scavenger, in which the air-permeable packaging material has a structure including, in this order, an outer layer including a substrate layer and a welding layer in this order and having no through-hole, an intermediate layer including a nonwoven fabric, and an inner layer having a through-hole, the air-permeable packaging material does not contain fluorine, a melting point of a resin constituting the nonwoven fabric is higher by 50°C or more than a higher one of a melting point of a resin constituting the welding layer and a melting point of a resin constituting the inner layer, and the nonwoven fabric has a thickness of 0.20 mm or more and 0.42 mm or less.

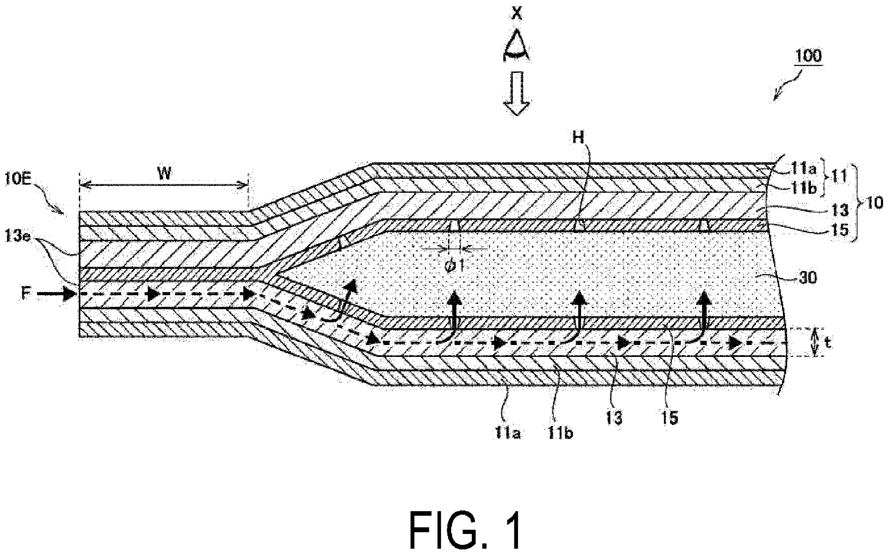

FIG. 1 is a schematic cross-sectional view showing an aspect of the oxygen scavenger package of the present invention. The oxygen scavenger package 100 includes an oxygen scavenger 30 and an air-permeable packaging material 10 housing the oxygen scavenger 30, and the air-permeable packaging material 10 includes an outer layer 11 which includes a substrate layer 11a and a welding layer 11b in this order and has no through-hole, an intermediate layer 13 including a nonwoven fabric, and an inner layer 15 having a through-hole H in this order. Here, the air-permeable packaging material 10 does not contain fluorine, the melting point of the resin constituting the nonwoven fabric is higher by 50°C or more than the higher one of the melting point of the resin constituting the welding layer 11b and the melting point of the resin constituting the inner layer 15, and a thickness t of the nonwoven fabric is 0.20 mm or more and 0.42 mm or less.

By having the above configuration, the oxygen scavenger package 100 of the present invention can cope with defluorination and can exhibit better oilproof properties and oxygen scavenging performance. The reason why the oxygen scavenger package of the present invention exhibits the above-mentioned effect is not clear but one possible reason is as follows.

In general, the air-permeable packaging material used for the oxygen scavenger package has a configuration including an outer layer, an intermediate layer, and an inner layer in this order. In a known air-permeable packaging material, the outer layer is generally subjected to a hole opening treatment in order to impart air permeability. Thus, oil has been infiltrated from an opening portion of the outer layer; however, permeation of oil to an inner layer side has been suppressed by using fluorine-based oilproof paper excellent in oilproof properties and air permeability as an intermediate layer.

On the other hand, in accordance with the trend of defluorination in recent years, the present inventors have studied an air-permeable packaging material that does not use fluorine-based oilproof paper as an intermediate layer, so that it has been found that when oilproof paper or a nonwoven fabric that does not contain fluorine is used instead of fluorine-based oilproof paper, in particular there is a problem that both oilproof properties and oxygen scavenging performance cannot be simultaneously achieved.

Specifically, oilproof paper (hereinafter, also referred to as "non-fluorine-based oilproof paper") that does not use a fluorine-based oilproof agent is inferior in air permeability to fluorine-based oilproof paper. Thus, when the non-fluorine-based oilproof paper is used as the intermediate layer of the air-permeable packaging material, although infiltration of oil can be prevented, the air permeability as the air-permeable packaging material 10 deteriorates, and there is a problem that the oxygen scavenging performance deteriorates.

On the other hand, oilproof paper and nonwoven fabric containing no fluorine, which have air permeability equivalent to that of fluorine-based oilproof paper, are inferior in oilproof properties to the fluorine-based oilproof paper, and can secure sufficient air permeability as the air-permeable packaging material; however, a problem of oil infiltration occurs, the oxygen scavenger may deteriorate due to the permeated oil, and the oxygen scavenging performance may deteriorate.

In addition, in the method of imparting the oilproof properties by not performing the hole opening treatment on the outer layer of the air-permeable packaging material, although it is possible to prevent oil from entering the inside of the air-permeable packaging material, there is a problem that the air permeability as the air-permeable packaging material deteriorates and the oxygen scavenging performance deteriorates.

Thus, the present inventors have extensively conducted studies on compatibility between the oilproof properties and the oxygen scavenging performance, and resultantly found that when the air-permeable packaging material 10 includes, in particular, the outer layer 11 not having a through-hole, the intermediate layer 13 including a predetermined nonwoven fabric, and the inner layer 15 having the through-hole H in this order as shown in FIG. 1, the air-permeable packaging material 10 as a whole can be configured not to contain fluorine, better oilproof properties and air permeability can be secured, and thereby the oxygen scavenger package 100 that copes with defluorination and is excellent in oilproof properties and oxygen scavenging performance can be obtained.

That is, the air-permeable packaging material 10 used in the present invention has no through-hole on the outer layer 11, and thus is excellent in oilproof properties. In addition, by using a nonwoven fabric not containing fluorine as the intermediate layer 13 instead of the fluorine-based oilproof paper that has been widely used heretofore, it is possible to cope with defluorination. In addition, it is considered that when the intermediate layer 13 includes a predetermined nonwoven fabric and the inner layer 15 has the through-hole H, air can pass from a cross section 13e of the intermediate layer 13 at an edge portion 10E of the air-permeable packaging material 10 toward the through-hole H of the inner layer 15, and sufficient air permeability can be secured inside and outside the air-permeable packaging material 10.

It is considered that the oxygen scavenger package 100 of the present invention can simultaneously achieve both excellent oilproof properties and oxygen scavenging performance by using the air-permeable packaging material 10 as described above.

In the present description, "contain no fluorine" means that fluorine that is blended by design as a component to be contained is not contained. Thus, a case where fluorine is contained without intention is excluded from this. Examples of the fluorine contained without intention include fluorine as inevitable impurities slightly mixed during a production process, a washing process, and the like. In the air-permeable packaging material 10 containing no fluorine used in the present invention, the content of fluorine contained without intention is, for example, less than 100 ppm.

The details of a configuration of the oxygen scavenger package according to the present embodiment will be described below.

### <Oxygen scavenger>

The oxygen scavenger 30 used in the present invention is not particularly limited, and a known oxygen scavenger can be used. Examples thereof include an oxygen scavenger containing, as a main component for an oxygen absorption reaction, a metal powder such as iron powder, a reducing inorganic substance such as an iron compound, a reducing organic substance such as a polyhydric phenol, a polyhydric alcohol, or an ascorbic acid or a salt thereof, a metal complex, a polymer compound having a carbon-carbon double bond, or the like. The oxygen scavenger does not need to be necessarily one component and may be, for example, a combination of a metal powder such as iron powder, and a catalyst, water, a metal salt, a carrier, or the like.

Among these, from the viewpoint of oxygen absorption performance, an oxygen scavenger containing iron powder as a main component is preferable. In addition, in a case where oil permeates the air-permeable packaging material for the oxygen scavenger containing iron powder as a main agent, a unique odor may be generated by a reaction between the permeated oil and the iron powder of the oxygen scavenger. To suppress generation of such an odor, the air-permeable packaging material for packaging the oxygen scavenger containing iron as the main agent, high oilproof properties as well as excellent air permeability is required. The air-permeable packaging material used in the present invention is preferably used for a case where the oxygen scavenger contains iron powder as a main agent in that the air-permeable packaging material can exhibit particularly excellent oilproof properties while good air permeability is achieved. As the oxygen scavenger containing the iron powder as a main agent is preferably an iron-based self-reactive oxygen scavenger containing iron powder, a metal halide, a carrier, and water.

The form of the oxygen scavenger 30 is not particularly limited, and appropriate and suitable form can be employed taking the purpose of use, environment, and the like into consideration. The oxygen scavenger 30 may be, for example, in a powder form or may be molded into a tablet or the like. When the oxygen scavenger 30 is powdery, it is preferable to adjust the size and shape of the through-hole H, the particle diameter of the oxygen scavenger 30, and the like so that the powder of the oxygen scavenger 30 does not enter the intermediate layer 13 from the through-hole H of the inner layer 15, and the powder of the oxygen scavenger 30 does not leak to the outside from the cross section 13e of the intermediate layer 13 in the edge portion 10E of the air-permeable packaging material 10.

### <Air-permeable packaging material (air-permeable packaging material for oxygen scavenger)>

The air-permeable packaging material 10 used in the present invention is an air-permeable packaging material for an oxygen scavenger (hereinafter, simply referred to as the "air-permeable packaging material") including the outer layer 11 including the substrate layer 11a and the welding layer 11b in this order and having no through-hole, the intermediate layer 13 including a nonwoven fabric, and the inner layer 15 having the through-hole H in this order, in which the air-permeable packaging material does not contain fluorine, the melting point of the resin constituting the nonwoven fabric is higher by 50°C or more than the higher one of the melting point of the resin constituting the welding layer 11b and the melting point of the resin constituting the inner layer 15, and the thickness t of the nonwoven fabric is 0.20 mm or more and 0.42 mm or less.

The details of each layer and components thereof of the air-permeable packaging material 10 according to the present embodiment will be described below.

### (Outer layer)

The outer layer 11 is a layer located on an outer surface side of the air-permeable packaging material 10. The outer layer 11 thus configured includes the substrate layer 11a and the welding layer 11b in this order, and has no through-hole.

Since the outer layer 11 has no through-hole, it is possible to effectively suppress oil from entering the inside of the air-permeable packaging material 10 from the outside.

The outer layer 11 only needs to include the substrate layer 11a and the welding layer 11b in contact with the intermediate layer 13, may further include other layers as necessary, and is preferably a layer consisting of the substrate layer 11a and the welding layer 11b.

The substrate layer 11a, the welding layer 11b, and the other layers each preferably contain a thermoplastic resin. The thermoplastic resin is not particularly limited, appropriate and suitable types of the thermoplastic resin can be selected based on the purpose of use and desired physical properties, and one type may be used alone, or two or more types may be used in combination.

Among these, the melting point of the resin constituting the substrate layer 11a is preferably higher than the melting point of the resin constituting the welding layer 11b, and a temperature difference between these melting points is more preferably as large as possible. Furthermore, the melting point of the resin constituting the substrate layer 11a is preferably higher than the melting point of the resin constituting the inner layer 15, and a temperature difference between these melting points is more preferably as large as possible.

The melting point of the resin constituting the substrate layer 11a is preferably from 200 to 300°C, more preferably from 220 to 280°C, and still more preferably from 235 to 270°C from the viewpoint of obtaining sufficient strength and flexibility as the air-permeable packaging material 10.

The melting point of the resin constituting the welding layer 11b is preferably from 85 to 125°C, more preferably from 90 to 120°C, and still more preferably from 95 to 115°C from the viewpoint of securing good adhesiveness with the substrate layer 11a and the intermediate layer 13.

The melting point can be measured by the method described in Examples, and a catalog value may be adopted.

Examples of the substrate layer 11a include polyethylene terephthalate, biaxially stretched polypropylene, and biaxially stretched nylon. In particular, the substrate layer 11a preferably contains one or more selected from the group consisting of polyethylene terephthalate and biaxially stretched polypropylene, more preferably one or more selected from the group consisting of polyethylene terephthalate and biaxially stretched polypropylene, still more preferably polyethylene terephthalate or biaxially stretched polypropylene, and even more preferably polyethylene terephthalate.

The substrate layer 11a may be a single layer film or a multilayer film including two or more layers made of different materials.

The welding layer 11b preferably contains a material having heat-sealing properties. Examples of the material having heat-sealing properties include resins, such as a low-density polyethylene, a medium-density polyethylene, a high-density polyethylene, a straight-chain (linear) low-density polyethylene, a polypropylene, an ethylene-vinyl acetate copolymer, an ionomer resin, an ethylene-acrylic acid copolymer, an ethylene-ethyl acrylate copolymer, an ethylene-methacrylic acid copolymer, an ethylene-α-olefin copolymer obtained by polymerization using a metallocene catalyst, a polypropylene, an ethylene-methyl methacrylate copolymer, an ethylene-propylene copolymer, a methylpentene polymer, a polybutene polymer, an acid-modified polyolefin resin obtained by modifying a polyolefin-based resin such as polyethylene or polypropylene with an unsaturated carboxylic acid such as acrylic acid, methacrylic acid, maleic acid, maleic anhydride, fumaric acid, or itaconic acid, a polyvinyl acetate-based resin, a poly(meth)acrylic resin, and a polyvinyl chloride-based resin. In particular, the welding layer 11b preferably contains one or more selected from the group consisting of polyethylene and an ethylene copolymer, more preferably one or more selected from the group consisting of polyethylene and an ethylene copolymer, still more preferably polyethylene, and even more preferably low-density polyethylene.

From the viewpoint of increasing a degree of freedom in heat-sealing conditions (temperature, pressure, time) of the air-permeable packaging material 10, the melting point of the resin constituting the welding layer 11b is preferably lower than the melting point of the resin constituting the inner layer 15, and a larger temperature difference between these melting points is more preferable.

Each layer constituting the outer layer 11 may further contain an additional component other than the thermoplastic resin. The additional component that can be used in the outer layer 11 is not particularly limited as long as it does not contain fluorine, and examples thereof include additives, such as a stabilizer, a lubricant, an antistatic agent, an antifogging agent, a filler, a coloring agent, a plasticizer, and a nucleating agent.

The thickness of the outer layer 11 is not particularly limited and is preferably from 1 to 50 µm, more preferably from 2 to 40 µm, still more preferably from 4 to 35 µm, and even more preferably from 8 to 30 µm. When the thickness of the outer layer 11 is in the range described above, the air-permeable packaging material 10 having sufficient strength can be obtained, and the air-permeable packaging material 10 having a proper flexibility required for processing, such as bending, during the production of the oxygen scavenger package can be obtained.

The thickness of the substrate layer 11a is not particularly limited, and is preferably from 0.5 to 25 µm, more preferably from 1 to 20 µm, and still more preferably from 5 to 15 µm from the viewpoint of obtaining sufficient strength and flexibility as the air-permeable packaging material 10.

The thickness of the welding layer 11b is not particularly limited, and is preferably from 0.5 to 25 µm, more preferably from 1 to 20 µm, and still more preferably from 10 to 20 µm from the viewpoint of securing good adhesiveness with the substrate layer 11a and the intermediate layer 13.

The thickness can be measured by the method described in Examples, and a catalog value may be adopted.

On a surface of the outer layer 11 on the substrate layer 11a side, printing or drawing can be performed by gravure printing or the like as necessary.

### (Intermediate layer)

The intermediate layer 13 is a layer including a nonwoven fabric, and is preferably a layer including only a nonwoven fabric. The intermediate layer 13 thus configured plays a role of preventing leakage of the oxygen scavenger 30 housed in the oxygen scavenger package 100 while imparting a certain degree of durability and air permeability to the air-permeable packaging material 10.

The nonwoven fabric constituting the intermediate layer 13 is a nonwoven fabric including a resin, the melting point of the resin constituting the nonwoven fabric is higher by 50°C or more than the higher one of the melting point of the resin constituting the welding layer 11b and the melting point of the resin constituting the inner layer 15, and the thickness t of the nonwoven fabric is 0.20 mm or more and 0.42 mm or less. By using such a nonwoven fabric as the intermediate layer 13, the air-permeable packaging material 10 exhibits excellent air permeability.

In the nonwoven fabric used in the present invention, the melting point of the resin constituting the nonwoven fabric is higher by 50°C or more than the higher one of the melting point of the resin constituting the welding layer 11b and the melting point of the resin constituting the inner layer 15, and the thickness t of the nonwoven fabric is 0.20 mm or more and 0.42 mm or less. Thereby, the air permeability can be secured from the cross section 13e of the intermediate layer 13 in the edge portion 10E of the air-permeable packaging material 10.

First, the oxygen scavenger package 100 shown in FIG. 1 includes the oxygen scavenger 30 and the air-permeable packaging material 10 that houses the oxygen scavenger 30. Furthermore, the oxygen scavenger package 100 shown in FIG. 1 is formed into a bag shape by heat-welding (heat-sealing) the edge portions 10E of the air-permeable packaging material 10 with the inner layer 15 inside. In FIG. 1, a broken line arrow F indicates a flow of gas corresponding to ventilation.

In the oxygen scavenger package 100 of the present invention, since the intermediate layer 13 of the air-permeable packaging material 10 includes a nonwoven fabric having excellent air permeability, air (gas flow F) from the cross section 13e of the intermediate layer 13 at the edge portion 10E of the air-permeable packaging material 10 can pass through the through-hole H of the inner layer 15, and the air permeability to the inside of the air-permeable packaging material 10 can be secured.

At this time, since the melting point of the resin constituting the nonwoven fabric is higher by 50°C or more than the higher one of the melting point of the resin constituting the welding layer 11b and the melting point of the resin constituting the inner layer 15, the resin constituting the nonwoven fabric is not melted and the nonwoven fabric is not clogged by welding during stacking in a production process of the air-permeable packaging material 10 or heat welding during molding the air-permeable packaging material 10 into a bag shape, and good air permeability specific to the nonwoven fabric can be maintained. When the thickness t of the nonwoven fabric is 0.20 mm or more and 0.42 mm, in the edge portion 10E of the air-permeable packaging material 10, a sufficient area as the cross section 13e of the intermediate layer 13 is secured, and poor lamination (delamination) does not occur, so that it is considered that an air-permeable packaging material having good air permeability can be obtained.

The resin constituting the nonwoven fabric is not particularly limited, and examples thereof include a thermoplastic resin such as polypropylene, polyamide, and polyester. More specific examples thereof include nylon (Ny) -based nonwoven fabrics ("ELTAS (trade name) series" available from Asahi Kasei Corporation, and the like), polyethylene terephthalate (PET) - based nonwoven fabrics ("ELTAS (trade name) series" available from Asahi Kasei Corporation, and the like), and TYVEK (trade name, available from DuPont-Asahi Flash Spun Products Co., Ltd.). Among these, the nonwoven fabric preferably contains one or more selected from the group consisting of polyamide and polyester, more preferably one or more selected from the group consisting of polyamide and polyester, and still more preferably polyester.

The melting point of the resin constituting the nonwoven fabric is higher by 50°C or more, preferably higher by 70°C or more, more preferably higher by 90°C or more, still more preferably higher by 100°C or more, and even more preferably higher by 110°C or more than the higher one of the melting point of the resin constituting the welding layer 11b and the melting point of the resin constituting the inner layer 15. By setting the temperature to the above range, it is possible to prevent the nonwoven fabric from being thermally deformed or welded to cause clogging due to welding in the production of the air-permeable packaging material 10 or heating at the time of heat-sealing the edge portion 10E, and it is possible to secure good air permeability. A difference in temperature between the melting point of the resin constituting the nonwoven fabric and the higher one of the melting point of the resin constituting the welding layer 11b and the melting point of the resin constituting the inner layer 15, is not particularly limited, and may be, for example, 215°C or lower, or 200°C or lower.

Specifically, the melting point of the resin constituting the nonwoven fabric is preferably 150°C or higher and 300°C or lower, more preferably 200°C or higher and 300°C or lower, still more preferably 200°C or higher and 270°C or lower, and even more preferably 230°C or higher and 270°C or lower.

The melting point can be measured by the method described in Examples, and a catalog value may be adopted.

The basis weight of the nonwoven fabric is not particularly limited, and is preferably from 20 to 120 g/m², more preferably from 35 to 95 g/m², and still more preferably from 40 to 70 g/m². When the basis weight of the nonwoven fabric is in the range described above, sufficient durability and air permeability can be obtained.

The basis weight can be measured in accordance with JIS P 8124:2011 "Paper and board-Determination of grammage", and a catalog value may be employed.

The thickness of the nonwoven fabric is 0.20 mm or more, preferably 0.22 mm or more, and more preferably 0.25 mm or more from the viewpoint of good air permeability, and is 0.42 mm or less, preferably 0.39 mm or less, and more preferably 0.35 mm or less particularly from the viewpoint of weldability between the intermediate layer 13 and the inner layer 15. Specifically, the thickness is 0.20 mm or more and 0.42 mm or less, preferably 0.22 mm or more and 0.39 mm or less, and more preferably 0.25 mm or more and 0.35 mm or less.

The thickness can be measured by the method described in Examples, and a catalog value may be adopted.

The air permeability of the nonwoven fabric is not particularly limited, and for example, the air resistance in accordance with JIS P8117:2009 is, for example, 100 seconds or less, preferably 50 seconds or less, and more preferably 10 seconds or less.

The air resistance can be measured by the method described in Examples, and a catalog value may be adopted.

The intermediate layer 13 may contain an additional component other than the components constituting the nonwoven fabric as long as the effects of the present invention are not impaired. The additional component that can be used in the intermediate layer 13 is not particularly limited as long as it does not contain fluorine, and examples thereof include a sizing agent (bleeding-preventing agent), a waterproof agent, a water-repellent agent, a paper strengthening agent, and a dye. Note that the intermediate layer 13 is preferably made only of the nonwoven fabric.

### (Inner layer)

The inner layer 15 is a layer located on an inner surface side of the air-permeable packaging material 10. The inner layer 15 thus configured has the through-hole H.

Since the inner layer 15 has the through-hole H, air can pass from the outside to the inside of the air-permeable packaging material 10.

The inner layer 15 preferably includes a thermoplastic resin. The thermoplastic resin is not particularly limited, appropriate and suitable types of the thermoplastic resin can be selected based on the purpose of use and desired physical properties, and one type may be used alone, or two or more types may be used in combination.

Examples of the resin constituting the inner layer 15 include an olefin-based resin such as polyethylene and polypropylene; an ethylene-vinyl acetate copolymer resin; and an ethylene-(meth)acrylate copolymer resin. Among these, from the viewpoint of adhesiveness, an olefin-based resin is preferred, polyethylene and polypropylene are more preferred, and a straight-chain (linear) low-density polyethylene, high-density polyethylene, and cast polypropylene are even more preferred.

More specifically, the inner layer 15 preferably contains linear low-density polyethylene and more preferably is linear low-density polyethylene.

The melting point of the resin constituting the inner layer 15 is preferably 80°C or higher, more preferably 95°C or higher, and still more preferably 110°C or higher. When the melting point is in the range described above, failure such as the resin constituting the inner layer 15 being melted even when heat-sealing is performed at the time of sealing the air-permeable packaging material 10 does not occur, and as a result, the oxygen scavenger can be reliably contained without occurrence of powder leakage or the like. The melting point of the resin constituting the inner layer 15 is preferably 200°C or lower, more preferably 180°C or lower, and still more preferably 150°C or lower. When the melting point is in the range described above, sufficient tight sealing can be performed in a short period of time without setting the heat-sealing temperature to a high temperature. More specifically, the melting point of the resin constituting the inner layer 15 is preferably from 80 to 200°C, more preferably from 95 to 180°C, and still more preferably from 110 to 150°C.

The melting point can be measured by the method described in Examples, and a catalog value may be adopted.

The inner layer 15 may further contain an additional component other than the thermoplastic resin. The additional component that can be used in the inner layer 15 is not particularly limited as long as it does not contain fluorine, and examples thereof include additives, such as a stabilizer, a lubricant, an antistatic agent, an antifogging agent, a filler, a coloring agent, a plasticizer, and a nucleating agent.

The thickness of the inner layer 15 is not particularly limited and is preferably from 0.5 to 80 µm, more preferably from 1 to 60 µm, still more preferably from 10 to 50 µm, and even more preferably from 20 to 50 µm. When the thickness of the inner layer 15 is in the range described above, sufficient adhesive strength can be achieved by heat-sealing in a short period of time.

The thickness can be measured by the method described in Examples, and a catalog value may be adopted.

The inner layer 15 has the through-hole H. Here, the through-hole H is a hole penetrating from one surface to the other surface of the inner layer 15.

The diameter or hole density of the through-hole H can be appropriately adjusted to obtain a target air permeability (air permeability level) as the entire air-permeable packaging material 10. Specifically, in a case where an edged tool or a needle is used, the adjustment can be made by the shape, introduction direction, arrangement, number, and the like of the edged tool or the needle; and in a case where a laser or an electron beam is used, the adjustment can be made by perforation conditions such as irradiation voltage, electric current, irradiation time, and irradiation direction.

Furthermore, the shape of the through-hole H is not particularly limited, examples of the cross section include a circle, a triangle, a rectangle such as a square, and an ellipse, and the longitudinal section is preferably a conical or pyramid-like shape tapered from the inner layer 15 side toward the intermediate layer 13 side or from the intermediate layer 13 side toward the inner layer 15 side.

Furthermore, the diameter of the through-hole H is not particularly limited, and the diameter φ1 of the through-hole H on the surface of the inner layer 15 not in contact with the intermediate layer 13 and the diameter φ2 of the through-hole H on the surface of the inner layer 15 in contact with the intermediate layer 13 may be the same or different. Note that the diameters φ1 and φ2 of the through-hole H can be measured by the method described in Examples, and are each a dimension (major axis) of the longest portion of an opening diameter.

The diameters φ1 and φ2 of the through-hole H are only required to be appropriately adjusted based on air permeability and the like required as the air-permeable packaging material 10, and an example thereof is from 100 to 2500 µm, preferably from 200 to 2000 µm, more preferably from 400 to 1000 µm, and still more preferably from 600 to 1000 µm. When the diameter is in the range described above, while the air permeability is improved, it is possible to prevent the oxygen scavenger 30 arranged inside from leaking to outside when the oxygen scavenger package 100 is formed.

A method for obtaining the inner layer 15 having the through-hole H is not particularly limited, and the inner layer 15 having the through-hole H can be formed by performing a hole opening treatment on a resin sheet or film constituting the inner layer 15 by a known method. Specific examples of the method of the hole opening treatment include a method of using a needle, a method of using an edged tool, a method of using an electron beam irradiation, and a method of using a laser.

Among these, from the viewpoint of ease in controlling the size and position of the opening, a method of opening a hole by using a needle is preferred, and from the viewpoint of producing the air-permeable packaging material 10 having stable density and shape of successive holes, a method of opening holes through a columnar jig having needles on a side face (hereinafter, also referred to as "needle roll") is more preferred. The diameter of a needle of the needle roll is preferably from 0.1 to 2.0 mm, more preferably from 0.3 to 1.0 mm, and still more preferably from 0.5 to 0.7 mm. When the diameter of the needle is in the preferred range described above, the opening shape becomes stable, and adjustment of air permeability level becomes easy. Furthermore, a needle pattern can be appropriately adjusted taking air permeability level and the like into consideration. Furthermore, when the needle roll is used, holes can be opened even when the temperature of the needle roll is at room temperature; however, when the needle roll is heated in a range that does not exceed the melting point of the resin used for the inner layer 15, the hole opening treatment can be more stably performed.

The treatment direction of the hole opening treatment (formation direction of the through-hole H) may be in a manner that the penetration is formed so as to penetrate the inner layer 15 from the surface on the side not in contact with the intermediate layer 13, or may be formed so as to penetrate the inner layer 15 from the surface on the side in contact with the intermediate layer 13. Due to the formation direction, the shape of the longitudinal section of the through-hole H is changed, and the air permeability level and the like can be adjusted. In particular, from the viewpoint of surface smoothness, it is preferable to form so as to penetrate the inner layer 15 from the surface on the side not in contact with the intermediate layer 13.

The diameter of the through-hole H can be appropriately controlled by the jig used for the hole opening treatment, the formation direction, and the like. Specifically, in a case where a needle having a tapered conical shape is used, when the diameter of the through-hole H on a surface of the inner layer 15 not in contact with the intermediate layer 13 is φ1 and the diameter of the through-hole H on a surface of the inner layer 15 in contact with the intermediate layer 13 is φ2, (1) a relationship of φ1 > φ2 is satisfied when the through-hole H is formed so as to penetrate through the inner layer 15 from the surface on the side not in contact with the intermediate layer 13, and (2) a relationship of φ1 < φ2 is satisfied when the through-hole H is formed so as to penetrate through the inner layer 15 from the surface on the side in contact with the intermediate layer 13.

### (Shape of air-permeable packaging material)

The air-permeable packaging material 10 used in the present invention houses the oxygen scavenger 30, and is not particularly limited as long as it has a shape capable of housing the oxygen scavenger 30, and preferably has a bag shape.

Examples of the bag-shaped air-permeable packaging material include an air-permeable packaging material having a bag shape formed by bonding two air-permeable packaging materials 10 to each other with the inner layer 15 inside, an air-permeable packaging material having a bag shape formed by bonding one air-permeable packaging material 10 and one air-impermeable packaging material to each other with the inner layer 15 inside, and an air-permeable packaging material having a bag shape formed by bending one air-permeable packaging material with the inner layer 15 inside and bonding edge portions excluding a bent portion to each other.

The method for bonding the air-permeable packaging material 10 is not particularly limited, and can be performed by a known method, and examples thereof include dry lamination and heat sealing.

When the method for bonding the air-permeable packaging material 10 is heat sealing, a welding temperature at the time of heat sealing is preferably lower than the melting point of the resin constituting the nonwoven fabric of the intermediate layer 13. By setting the welding temperature, it is possible to prevent the resin constituting the nonwoven fabric from melting and clogging, and it is possible to maintain good air permeability of the air-permeable packaging material 10.

When the air-permeable packaging material 10 has a quadrilateral shape, examples of the packaging material include a packaging material having a bag shape formed by overlapping the two air-permeable packaging materials 10 and heat-sealing their four sides, a packaging material having a bag shape formed by overlapping one air-permeable packaging material 10 and one air-impermeable packaging material and heat-sealing their four sides, and a packaging material having a bag shape formed by folding one air-permeable packaging material 10 and heat-sealing its three sides other than the folded portion. In addition, the packaging material may be a packaging material having a bag shape formed by forming the air-permeable packaging material 10 into a tubular shape and heat-sealing both end portions and a trunk portion of the resulting tubular body.

When the air-permeable packaging material 10 is formed in a bag shape by heat-welding the edge portions 10E to each other with the inner layer 15 inside, a width perpendicular to a length direction of the heat-welded portion is preferably 0.3 mm or more and 15 mm or less, and more preferably 3 mm or more and 10 mm or less. When the width perpendicular to the length direction of the heat-welded portion is in the range described above, the oxygen scavenger can be held well inside the air-permeable packaging material.

In the present specification, the "length direction of the heat-welded portion" refers to a continuous direction along the edge portion of the air-permeable packaging material. The edge portion is not necessarily linear, and may be curved.

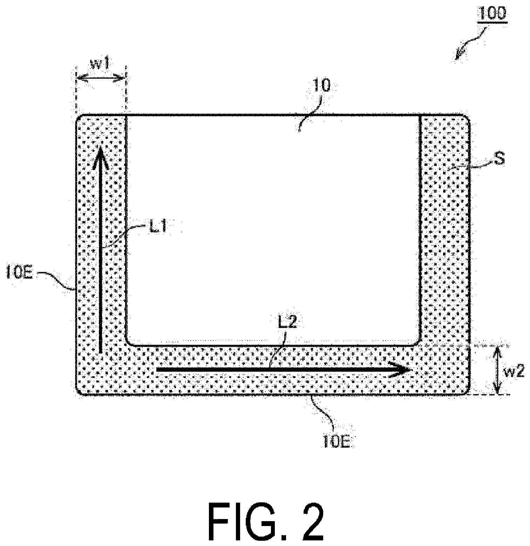

FIG. 2 is a schematic view of the oxygen scavenger package 100 of the present invention shown in FIG. 1 as viewed from an X direction. Here, a portion where the edge portions 10E are heat-welded to each other with the inner layer 15 inside is indicated as a region S. In addition, the length direction of the heat-welded portion S is indicated as continuous directions L1 and L2 along the edge portion 10E of the air-permeable packaging material 10, and the widths perpendicular to the length directions L1 and L2 of the heat-welded portion are indicated as widths w1 and w2.

### (Method for producing air-permeable packaging material)

The method for producing the air-permeable packaging material 10 of the present invention is not necessarily limited, and preferably includes a step of stacking the outer layer 11 including the substrate layer 11a and the welding layer 11b in this order, the intermediate layer 13, and the inner layer 15 so as to have a configuration including the layers in this order and welding the layers, and the welding step is performed at a temperature lower than the melting point of the resin constituting the nonwoven fabric of the intermediate layer 13.

Note that details of each layer are as described above.

In the air-permeable packaging material 10 prepared by such a production method, the resin constituting the nonwoven fabric of the intermediate layer 13 is not melted and the nonwoven fabric is not clogged in the step of stacking and welding the layers, so that good air permeability can be exhibited.

The procedure of the step of stacking the outer layer 11, the intermediate layer 13, and the inner layer 15 so as to have a structure including the layers in this order and welding the layers is not limited as long as the layers are stacked so as to have the layer structure. For example, (1) a composite layer may be prepared by stacking and welding the inner layer 15 and the intermediate layer 13 in advance, and then the outer layer 11 may be stacked and welded on the intermediate layer 13 side of the composite layer, (2) a composite layer may be prepared by stacking and welding the outer layer 11 and the intermediate layer 13 in advance, and then the inner layer 15 may be stacked and welded on the intermediate layer 13 side of the composite layer, or (3) the three layers may be simultaneously stacked and welded. Among these, the procedure (1) is preferable from the viewpoint of being able to perform the operation while confirming the state of the opening of the inner layer 15.

The method for stacking and welding the layers is not particularly limited, and for example, a known method such as thermal lamination can be adopted. The welding may be performed so that each layer is not peeled off, and may be partial welding or full surface welding; however, full surface welding is preferable from the viewpoint of securing good adhesiveness.

The welding temperature may be any temperature lower than the melting point of the resin constituting the nonwoven fabric of the intermediate layer 13, and can be appropriately selected in consideration of the melting point of the resin constituting the inner layer 15 and the melting point of the resin constituting the welding layer 11b of the outer layer 11. From the viewpoint of obtaining good adhesiveness, the welding temperature is preferably higher than the higher one of the melting point of the resin constituting the inner layer 15 and the melting point of the resin constituting the welding layer 11b of the outer layer 11. Specifically, the welding temperature is preferably 150°C or higher and 280°C or lower, more preferably 170°C or higher and 230°C or lower, and still more preferably 170°C or higher and lower than 230°C.

### <Method for producing oxygen scavenger package>

A method for producing the oxygen scavenger package 100 of the present invention is not particularly limited, and appropriate and suitable method can be employed taking the purpose of use, environment, and the like into consideration. For example, it is preferable to wrap the oxygen scavenger 30 so as to be in contact with the inner layer 15 of the air-permeable packaging material 10, and more specifically, it is preferable to house the oxygen scavenger 30 inside the air-permeable packaging material 10 formed into a bag shape by bonding with the inner layer 15 inside to seal the opening portion of the air-permeable packaging material 10.

### <Use of oxygen scavenger package>

Since the oxygen scavenger package 100 of the present invention includes the air-permeable packaging material 10 of the present invention, the oxygen scavenger package is excellent in oilproof properties and oxygen scavenging performance. Thus, the oxygen scavenger package is particularly suitably used for preservation of a stored object containing a relatively large amount of oil.

When the oxygen scavenger package 100 of the present invention is used, it is preferable to use a package including the oxygen scavenger package 100, a stored object, and a gas barrier container for housing these.

Examples of the stored object include confectioneries such as baked confectioneries such as madeleine and financier, and chocolate confectioneries; milk products such as cheese and butter; meats such as beef, pork, and chicken; livestock processed products such as salami, sausage, and ham; dry foods such as powdered soups, powdered seasonings such as instant soup stocks, powdered coffees, powdered milks for infants, and powdered diet foods; chemicals such as pesticides and insecticides; pharmaceuticals; cosmetics; pet foods; and various articles.

Among these, the present invention is particularly suitable for food containing 1 mass% or more and 50 mass% or less of lipid. Such a food product is likely to be altered by oxygen, and is likely to cause a problem such as infiltration of oil into the oxygen scavenger package. However, by using the oxygen scavenger package containing the air-permeable packaging material of the present invention, it is possible to particularly effectively suppress permeation of oil into the oxygen scavenger.

More specific examples of such food include chocolate confectionery containing 1 mass% or more and 50 mass% or less of lipid, and meat (for example, beef) containing 1 mass% or more and 50 mass% or less of lipid. In the case of the chocolate confectionery, the oxygen scavenger package of the present invention is particularly useful when stored at normal temperature (for example, 25°C), and in the case of meat, the oxygen scavenger package of the present invention is particularly useful when stored under refrigerated conditions (for example, 5°C or higher and 10°C or lower).

Although the embodiments of the present invention have been described above, the present invention is not limited to the above-described embodiments, and includes all aspects included in the concept of the present invention and the scope of the claims, and can be variously modified within the scope of the present invention.

### Examples

Hereinafter, the present embodiment will be described in detail using Examples and Comparative Examples, but the present embodiment can be modified as appropriate as long as the present embodiment achieves the effects of the present invention.

### <Measurement>

Various measurements in Examples and Comparative Examples were performed as follows.

### (Thickness)

As the thickness, a catalog value was adopted except for the thickness of the following intermediate layer.

### [Thickness of intermediate layer (nonwoven fabric)]

The thickness of the intermediate layer (nonwoven fabric) was measured by cutting the air-permeable packaging material of the oxygen scavenger package at a portion that was not an outer peripheral heat sealed portion, observing the thickness of the intermediate layer in the cut surface using a digital microscope ("VHX-5000" available from KEYENCE CORPORATION), and measuring a distance between two points using attached software.

In Comparative Example 10, delamination occurred during the production process, so that an air-permeable packaging material having a predetermined configuration was not obtained, and an oxygen scavenger package was not prepared. Thus, in Comparative Example 10, in the air-permeable packaging material in which delamination occurred, a portion having good interlayer adhesion was selected, the cut surface was observed, and the thickness of the intermediate layer was measured.

When the intermediate layer is a nonwoven fabric, since the nonwoven fabric is embossed, a difference in thickness is large depending on an observation point. In particular, since the difference in thickness between a compressed portion and an uncompressed portion by embossing is particularly large, in the present measurement, an uncompressed portion of the nonwoven fabric is randomly selected on the cut surface, the thickness of the thickest portion in the uncompressed portion is measured, and measured values of the thickness at three portions of the randomly selected uncompressed portion are averaged to obtain the thickness t of the nonwoven fabric.

On the other hand, when the intermediate layer was oilproof paper, there was not much difference in thickness depending on the observation point. Thus, in the cut surface, the observation point was randomly selected, the thickness of the selected portion was measured, and the measured values of the thickness at the randomly selected three portions were averaged to obtain the thickness of the oilproof paper.

### (Melting point)

The melting point was measured in a nitrogen atmosphere using a differential scanning calorimeter ("DSC-60" available from Shimadzu Corporation) in accordance with JIS K 7121-1987.

### (Basis weight)

The basis weight was a weight per 1 m² of nonwoven fabric or oilproof paper, and a catalogue value was used.

### (Air resistance)

The air resistance was measured by using an Oken type air-permeability tester (model: EG02, available from Asahi Seiko Co., Ltd.) in accordance with JIS P 8117:2009. Note that the measurement was performed by a mode in which a median of the measurable range was 2000. Furthermore, the measurement was performed 10 times for the same nonwoven fabric or oilproof paper.

### <Material>

Materials and the like used in Examples and Comparative Examples are listed below.

### (1) Outer layer

### • Non-perforated film having a two-layer structure: produced by the following method.

A polyethylene terephthalate film (thickness: 12 µm; melting point: 255°C; hereinafter, referred to as "PET film") as a substrate layer and a low-density polyethylene (thickness: 15 µm; melting point: 105°C; hereinafter, referred to as "PE") as a welding layer were stacked, extrusion-laminated, and thus a non-perforated film having a two-layer structure was obtained.

### • Perforated film having a two-layer structure: prepared by the following method.

The non-perforated film was subjected to a hole opening treatment using a needle roll (needle pattern: 10.0 mm × 10.0 mm, needle diameter: 0.6 mm) so as to penetrate from a surface of the PET film to PE to form an external vent hole, thereby obtaining a perforated film having a two-layer structure.

### (2) Intermediate layer

- PET nonwoven fabric 1: "ELTAS (trade name) E01040" available from Asahi Kasei Corporation; basis weight: 40 g/m²; air resistance: 0 seconds; melting point: 257°C
- PET nonwoven fabric 2: "ELTAS (trade name) E01050" available from Asahi Kasei Corporation; basis weight: 50 g/m²; air resistance: 0 seconds; melting point: 257°C
- PET nonwoven fabric 3: "ELTAS (trade name) E01070" available from Asahi Kasei Corporation; basis weight: 70 g/m²; air resistance: 0 seconds; melting point: 257°C
- PET nonwoven fabric 4: "ELTAS (trade name) E01012" available from Asahi Kasei Corporation; basis weight: 12 g/m²; air resistance: 0 seconds; melting point: 257°C
- PET nonwoven fabric 5: "ELTAS (trade name) E01030" available from Asahi Kasei Corporation; basis weight: 30 g/m²; air resistance: 0 seconds; melting point: 257°C
- PET nonwoven fabric 6: "ELTAS (trade name) E01100" available from Asahi Kasei Corporation; basis weight: 100 g/m²; air resistance: 0 seconds; melting point: 257°C
- Ny nonwoven fabric: "ELTAS (trade name) N01050" available from Asahi Kasei Corporation; basis weight: 50 g/m²; air resistance: 0 seconds; melting point: 215°C
- PET-PE nonwoven fabric: "ELEVES (trade name) S0503WDO" available from UNITIKA LTD.; basis weight: 50 g/m²; air resistance: 0 second; melting point: 127°C
- Fluorine-based oilproof paper: oilproof paper obtained by applying a fluorine-containing oilproof agent to a surface thereof; basis weight: 50 g/m²; air resistance: from 6 to 9 seconds (average: 7 seconds)
- Non-fluorine-based oilproof paper: Oilproof paper impregnated with a starch-based oilproof agent; basis weight: 35 g/m²; air resistance: from 340 to 1700 seconds (average: 765 seconds)

### (3) Inner layer: prepared by the following method.

A linear low-density polyethylene film (thickness: 40 µm, melting point: 123°C; hereinafter, referred to as "LLDPE 40") was subjected to a hole opening treatment (opening rate: 5.7 points/cm², needle diameter: 0.6 mm, needle pattern: 5.0 mm × 5.0 mm) using a needle roll to obtain an inner layer.

### (4) Oxygen scavenger: powdery iron-based self-reactive oxygen scavenger containing iron powder, calcium chloride, sodium chloride, diatomaceous earth impregnated with water, and activated carbon

### (Example 1)

### [1] Preparation of air-permeable packaging material

First, using the PET nonwoven fabric 1 as an intermediate layer, the intermediate layer and the inner layer were stacked in such an arrangement that a surface of the inner layer pierced with the needle roll was on the outer side, and subjected to thermal lamination to be entirely welded, thereby obtaining a two-layer composite film.

The thermal lamination was performed by sandwiching a laminate including the intermediate layer and the inner layer between two protective PET films (100 µm), and pressing iron ("NI-CL312-H" available from Panasonic Corporation) heated to a surface temperature of 185°C from above the protective PET film on the intermediate layer side for 3 seconds.

Next, the protective PET film on the intermediate layer side was peeled off, and a non-perforated film having a two-layer structure as an outer layer was disposed and stacked on the intermediate layer in such a manner that the PE side faced the intermediate layer side, and the laminate was subjected to thermal lamination and entirely welded to obtain a packaging material multilayer film (air-permeable packaging material).

The thermal lamination was performed by stacking a protective PET film (the same as above) on the outer layer again, and pressing iron (the same as above) heated to a surface temperature of 185°C from above the protective PET film on the outer layer side for 5 seconds. After welding, all the protective PET films were removed.

The obtained air-permeable packaging material had a layer structure of an outer layer (non-perforated film having a two-layer structure: substrate layer (PET film)/welding layer (PE))/intermediate layer (PET nonwoven fabric 1)/inner layer (LLDPE40, diameter φ1 of through-hole H: 860 µm).

### [Diameter φ1 of through-hole H]

The diameter φ1 of the through-hole H was measured by the following method.

First, a seal check liquid ("Ageless seal check liquid" available from MITSUBISHI GAS CHEMICAL COMPANY, INC.) was sprayed onto one surface on the inner layer side of the air-permeable packaging material having the above-described layer structure, then the seal check liquid remaining on an inner layer surface was thoroughly wiped off with a paper wiper (KimWipes), and only a portion (opening portion) of the intermediate layer exposed from the through-hole H was dyed.

The dyed opening portion was randomly selected and observed using a digital microscope (the same as above) to measure the dimension (major axis) of the longest portion of the opening diameter, and measured values of the randomly selected six opening portions were averaged to obtain the diameter φ1 of the through-hole H.

### [2] Preparation of oxygen scavenger package

The obtained air-permeable packaging material was cut into a size of 6 cm × 4 cm, folded in two at a central portion of a long side so that the inner layer side was on the inner side, and heat-sealed with an adhesion width of 5 mm so that one side was opened to prepare a sachet-shaped air-permeable packaging material having an outer dimension of 3 cm × 4 cm. After 0.7 g of oxygen scavenger was filled in the air-permeable packaging material, one open side of the air-permeable packaging material was heat-sealed with an adhesion width of 5 mm to seal the air-permeable packaging material, and thus to obtain an oxygen scavenger package.

The heat sealing was performed using a desktop sealer ("P-300" available from FUJIIMPULSE CO., LTD.) under the condition of an adjustment knob 8.

### (Examples 2 to 4)

In Examples 2 to 4, an air-permeable packaging material and an oxygen scavenger package were prepared in the same manner as in Example 1 except that the intermediate layer was changed to that shown in Table 1.

### (Comparative Examples 1 to 4)

In Comparative Examples 1 to 4, an air-permeable packaging material and an oxygen scavenger package were prepared in the same manner as in Example 1 except that the outer layer was changed to a perforated film having a two-layer structure and the intermediate layer was changed to that shown in Table 1.

### (Comparative Examples 5 to 9)

In Comparative Examples 5 to 9, an air-permeable packaging material and an oxygen scavenger package were prepared in the same manner as in Example 1 except that the intermediate layer was changed to that shown in Table 1.

### (Comparative Example 10)

In Comparative Example 10, although the intermediate layer was changed to that shown in Table 1, under the same conditions as in Example 1, the intermediate layer and the inner layer could not be welded well, and the layers were easily peeled off (delamination), so that an air-permeable packaging material having a predetermined layer structure could not be prepared. Thus, it was not possible to prepare an oxygen scavenger package.

### <Evaluation>

The following evaluation test was conducted using the oxygen scavenger packages prepared in Examples and Comparative Examples. In Comparative Example 10, since an oxygen scavenger package could not be prepared, the following evaluation test was not conducted.

### [Presence or absence of containing of fluorine]

Among the materials used above, the material containing fluorine was only fluorine-based oilproof paper. Thus, in the present example, the case where the fluorine-based oilproof paper was used was evaluated as "presence" of containing of fluorine, and the other cases were evaluated as "absence". The results are shown in Table 1.

### [Evaluation test]

One oxygen scavenger package and one piece (20 g) of fruit pound cake (trade name "Seven Premium Yoshu ga kaoru fruit pound cake (fruit pound cake with hint of liquor)") were put in an oxygen barrier bag (size: 150 mm × 200 mm, oxygen permeability: 0.53 mL/m²·24 h·MPa or less (Mocon method, 20°C, 65%RH)) together with 100 ml of air in a state of being brought into contact with each other, and were hermetically sealed. Then, the sealed oxygen barrier bag was immediately placed in a thermostat oven at 25°C and stored for 1 week.

After one week, the oilproof properties and the oxygen scavenging performance were evaluated by the following method. The results are shown in Table 1.

### (Oilproof properties)

After one week, the oxygen barrier bag was opened, the oxygen scavenger package was taken out, the oxygen scavenger (bulk powder) filled in the oxygen scavenger package was taken out, and whether or not permeation of oil into the oxygen scavenger occurred was visually confirmed. In the present example, a case where the oxygen scavenger was wet due to permeation of oil and the fluidity was lost was evaluated as "presence" of permeation of oil, and the other cases were evaluated as "absence".

### (Oxygen scavenging performance)

After one week, a rubber sheet for sampling (25 mm × 25 mm, thickness: 2 mm) was attached to the oxygen barrier bag before opening, an injection needle was inserted from the rubber sheet to collect gas inside, and an oxygen concentration was measured.

The measurement was performed using a gas chromatograph ("GC-2014" available from Shimadzu Corporation). The oxygen concentration was calculated by substituting the measured value into a calibration curve prepared in advance.

The measurement was performed three times, and an arithmetic average value of the obtained results was evaluated as the oxygen concentration in the oxygen barrier bag. It means that the lower the oxygen concentration in the oxygen barrier bag, the better the oxygen scavenging performance of the used oxygen scavenger package. In the present example, a case where the oxygen concentration in the oxygen barrier bag was 0.1% or less was evaluated as good.

### [Table 1]

**Table 1**

| | Outer layer | Intermediate layer | | | | Presence or absence of containing of fluorine | Oilproof properties | Oxygen scavenging performance |
|---|---|---|---|---|---|---|---|---|
| | Presence or absence of through-hole | Type | Melting point difference^{*} | Thickness | Basis weight | | Presence or absence of permeation of oil | Oxygen concentration |
| | | | °C | mm | g/m² | | | % |
| Example 1 | Absence | PET nonwoven fabric 1 | 134 | 0.22 | 40 | Absence | Absence | 0.01 |
| Example 2 | Absence | PET nonwoven fabric 2 | 134 | 0.26 | 50 | Absence | Absence | 0.01 |
| Example 3 | Absence | PET nonwoven fabric 3 | 134 | 0.39 | 70 | Absence | Absence | 0.01 |
| Example 4 | Absence | Ny nonwoven fabric | 92 | 0.27 | 50 | Absence | Absence | 0.01 |
| Comparative Example 1 | Presence | Fluorine-based oilproof paper | - | 0.07 | 50 | Presence | Absence | 0.00 |
| Comparative Example 2 | Presence | Non-fluorine-based oilproof paper | - | 0.05 | 35 | Absence | Absence | 0.34 |
| Comparative Example 3 | Presence | PET nonwoven fabric 2 | 134 | 0.28 | 50 | Absence | Presence | 0.00 |
| Comparative Example 4 | Presence | Ny nonwoven fabric | 92 | 0.28 | 50 | Absence | Presence | 0.00 |
| Comparative Example 5 | Absence | Fluorine-based oilproof paper | - | 0.07 | 50 | Presence | Absence | 0.02 |
| Comparative Example 6 | Absence | Non-fluorine-based oilproof paper | - | 0.05 | 35 | Absence | Absence | 9.44 |
| Comparative Example 7 | Absence | PET-PE nonwoven fabric | 4 | 0.16 | 50 | Absence | Absence | 12.99 |
| Comparative Example 8 | Absence | PET nonwoven fabric 4 | 134 | 0.06 | 12 | Absence | Absence | 20.64 |
| Comparative Example 9 | Absence | PET nonwoven fabric 5 | 134 | 0.19 | 30 | Absence | Absence | 20.90 |
| Comparative Example 10 | Absence | PET nonwoven fabric 6 | 134 | 0.45 | 100 | No packaging material can be prepared | | |

| | | | | | | | | |
|---|---|---|---|---|---|---|---|---|
| * Melting point difference means "difference between higher one of melting point of resin constituting welding layer and melting point of resin constituting inner layer and melting point of nonwoven fabric". | | | | | | | | |

As shown in Table 1, it was confirmed that the oxygen scavenger package using the air-permeable packaging material in which the outer layer had no through-hole, the melting point of the resin constituting the nonwoven fabric of the intermediate layer was higher by 50°C or more than the higher one of the melting point of the resin constituting the welding layer and the melting point of the resin constituting the inner layer, and the thickness of the nonwoven fabric was 0.20 mm or more and 0.42 mm or less could cope with defluorination and exhibited excellent oilproof properties and oxygen scavenging performance (Examples 1 to 4).

On the other hand, in the case where the outer layer of the air-permeable packaging material used had a through-hole (Comparative Examples 1 to 4), and in the case where the outer layer of the air-permeable packaging material used had no through-hole and the intermediate layer was fluorine-based oilproof paper (Comparative Example 5), non-fluorine-based oilproof paper (Comparative Example 6), or a nonwoven fabric that did not satisfy a predetermined requirement (Comparative Examples 7 to 9), it was confirmed that defluorination could not be coped with, or both excellent oilproof properties and oxygen scavenging performance could not be achieved simultaneously.

It was confirmed that when a nonwoven fabric having a thickness exceeding a predetermined thickness was used as the intermediate layer of the air-permeable packaging material, an air-permeable packaging material having a predetermined layer structure was not obtained due to poor lamination (delamination) (Comparative Example 10).

### Industrial Applicability

The oxygen scavenger package and the air-permeable packaging material for an oxygen scavenger according to the present invention can be used in a wide variety of use, such as food products and pharmaceuticals, regardless of a target object.

### Reference Signs List

100: Oxygen scavenger package
10: Air-permeable packaging material
10E: Edge portion of air-permeable packaging material
11: Outer layer
11a: Substrate layer
11b: Welding layer
13: Intermediate layer
13e: Cross section of intermediate layer
15: Inner layer
H: Through-hole
30: Oxygen scavenger
F: Gas flow
t: Thickness of nonwoven fabric
w: Width of heat-welded portion
X: Direction in which FIG. 2 is viewed
L1 and L2: Continuous direction along edge portion 10E of air-permeable packaging material 10
w1 and w2: Width perpendicular to length directions L1 and L2 of heat-welded portion
S: Heat-welded portion

## Claims

1. An oxygen scavenger package comprising:
an oxygen scavenger; and
an air-permeable packaging material housing the oxygen scavenger,
wherein the air-permeable packaging material has a structure including, in this order, an outer layer including a substrate layer and a welding layer in this order and having no through-hole, an intermediate layer including a nonwoven fabric, and an inner layer having a through-hole, the air-permeable packaging material does not contain fluorine, a melting point of a resin constituting the nonwoven fabric is higher by 50°C or more than a higher one of a melting point of a resin constituting the welding layer and a melting point of a resin constituting the inner layer, and the nonwoven fabric has a thickness of 0.20 mm or more and 0.42 mm or less.

2. The oxygen scavenger package according to claim 1, wherein the substrate layer contains one or more selected from the group consisting of polyethylene terephthalate and biaxially stretched polypropylene.

3. The oxygen scavenger package according to claim 1 or 2, wherein the welding layer contains one or more selected from the group consisting of polyethylene and an ethylene copolymer.

4. The oxygen scavenger package according to any one of claims 1 to 3, wherein the nonwoven fabric contains one or more selected from the group consisting of polyamide and polyester.

5. The oxygen scavenger package according to any one of claims 1 to 4, wherein the inner layer contains linear low-density polyethylene.

6. The oxygen scavenger package according to any one of claims 1 to 5, wherein the melting point of the resin constituting the nonwoven fabric is 150°C or higher and 300°C or lower.

7. The oxygen scavenger package according to any one of claims 1 to 6, wherein the air-permeable packaging material is formed in a bag shape by heat-welding edge portions to each other with the inner layer inside, and a width perpendicular to a length direction of the heat-welded portion is 0.3 mm or more and 15 mm or less.

8. An air-permeable packaging material for an oxygen scavenger having a structure comprising, in this order:
an outer layer including a substrate layer and a welding layer in this order and having no through-hole;
an intermediate layer including a nonwoven fabric; and
an inner layer having a through-hole,
wherein the air-permeable packaging material for an oxygen scavenger does not contain fluorine, a melting point of a resin constituting the nonwoven fabric is higher by 50°C or more than a higher one of a melting point of a resin constituting the welding layer and a melting point of a resin constituting the inner layer, and the nonwoven fabric has a thickness of 0.20 mm or more and 0.42 mm or less.

9. The air-permeable packaging material for an oxygen scavenger according to claim 8, the air-permeable packaging material being formed in a bag shape by heat-welding edge portions to each other with the inner layer inside,
wherein a width perpendicular to a length direction of the heat-welded portion is 0.3 mm or more and 15 mm or less.

10. A method for producing the air-permeable packaging material for an oxygen scavenger described in claim 8 or 9, the method comprising stacking the outer layer including the substrate layer and the welding layer, the intermediate layer, and the inner layer in such a way that the layers are included in this order and welding the layers,
wherein the welding is performed at a temperature lower than the melting point of the resin constituting the nonwoven fabric of the intermediate layer.
